Europäisches Patentamt

European Patent Office

Office européen des brevets

(11) Publication number: **0 270 859**
**A1**

## (12) EUROPEAN PATENT APPLICATION

(21) Application number: 87116557.7

(51) Int. Cl.⁴: **A47J 36/24** , B60N 3/16

(22) Date of filing: 10.11.87

(30) Priority: 20.11.86 IT 2375486 U

(43) Date of publication of application:
**15.06.88 Bulletin 88/24**

(84) Designated Contracting States:
**AT BE CH DE ES FR GB GR LI LU NL SE**

(71) Applicant: GUABER S.p.A.
**Via Gobetti No. 4**
**I-40050 Funo di Argelato Bologna(IT)**

(72) Inventor: **Gualandi, Paolo**
**Via Rosario No. 15/A**
**I-40013 Trebbo Di Castelmaggiore**
**Bologna(IT)**

(74) Representative: **Petruzzelli, Antonio**
**Via E. De Amicis No. 25**
**I-20123 Milan(IT)**

(54) **Electric heating apparatus for pre-packed drinks.**

(57) An electric apparatus for heating drinks pre-packed in containers (11), the apparatus comprises a casing (10) for the drink container (11), electric heating means (12, 15) and retaining means (20) for removably holding the drink container (11).The support casing (10) is provided with support shank (19) having electric plug means (17a, 17b) for feeding current and means for retaining said shank (19) in an electric current socket.

Fig. 3

EP 0 270 859 A1

## ELECTRIC HEATING APPARATUS FOR PRE-PACKED DRINKS.

The present invention refers to an electric apparatus used for heating pre-packed drinks in special containers in glass, carton or other suitable material, which can be easily employed in any circumstances since it makes it possible, with extreme ease, to support and heat the pre-packed drink directly in its container, as the apparatus is supported stably by its own plug member for feeding the electric current. Although the apparatus is particularly useful for being used in motor vehicles, utilizing the same electric current socket as is normally provided for the cigarette lighter, by means of a suitable conformation of the electric plug member the apparatus can be predisposed to be used with normal electric current sockets installed on walls in dwelling-houses, offices, public buildings and suchlike.

There exist on the market drinks pre-packed in special closed containers in carton containing a single dose of coffee already packed in the form of an infusion. Such containers are particularly useful and allow availability of the drink in any circumstances, in particular during journeys by car, in the office or elsewhere. Nevertheless, in the absence of a special heating device, the drink has to be drunk cold. However, traditional electric rings used for cooking or heating food and drinks are known; nevertheless, these rings have to rest on a special support, they are cumbersome and require the use of a separate metal container to pour the drink into and heat it, before drinking.

The use of the traditional heating rings proves rather inconvenient or impossible in certain circumstances, for example, in a motor vehicle in motion, or the heating ring proves cumbersome and not very practical.

The object of the present invention is to provide an electric apparatus for heating drinks pre-packed in containers, which is not cumbersome and is utilizable in any circumstances, comprising the possibility never provided up to now of using this apparatus also in a car in motion, even without having a stable lodging place available.

The above is made possible by means of an electric apparatus for heating drinks pre-packed in a container, characterized by the fact that it comprises a casing for housing the drink container, electric heating means in said casing and retaining means for removably retaining drink container are in said casing and in contact with the electric heating means; said support casing comprising a support shank provided with electric plug means for feeding the current, and retaining means for retaining said support shank in an electric current socket.

In utilizing the innovative concepts explained above, the practical realization of the apparatus can be varied, for example, as regards the exterior shape, the disposition and type of electric heating means and the retaining means for the drink container. As an unrestrictive example, the apparatus of the present invention will be more fully illustrated here below with reference to a specific solution shown in the attached drawings, in which:

Fig. 1 is a lateral view of the apparatus;

Fig. 2 is a plan view from above;

Fig. 3 is a schematic cross-section according to line 3-3 of Fig. 2;

Fig. 4 is a possible electric scheme of the heating means incorporated in the apparatus of the preceding figures.

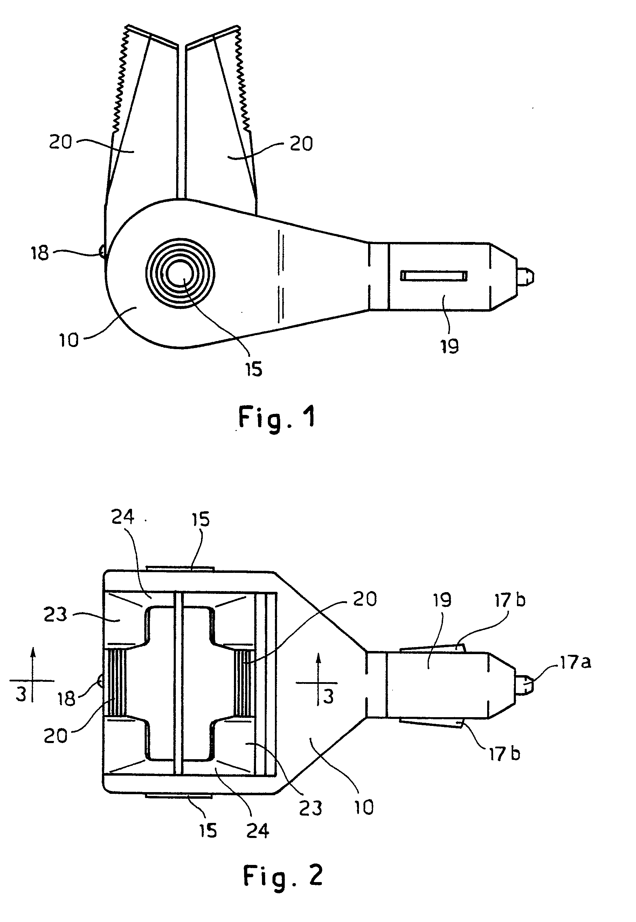

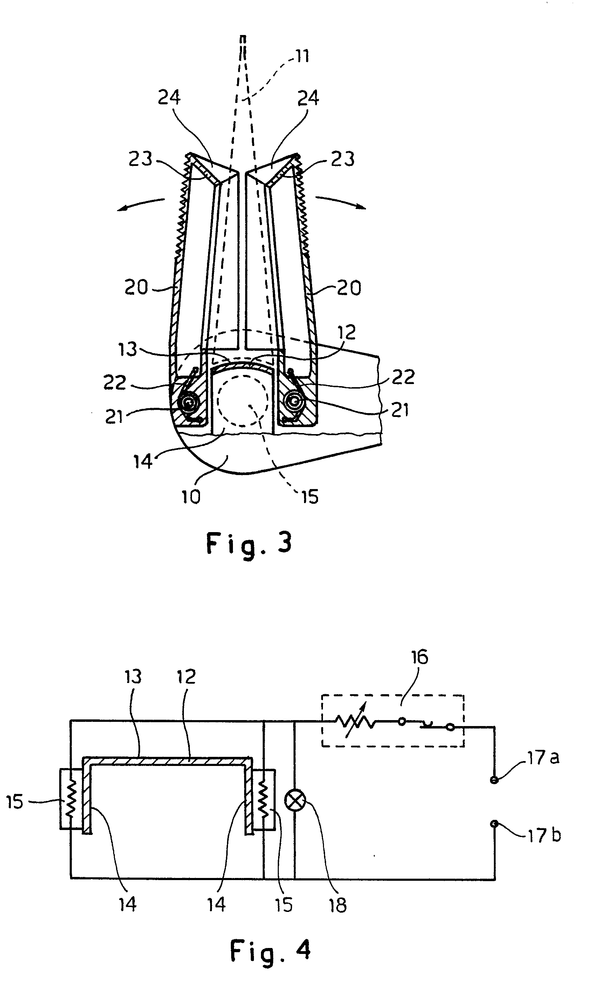

The heating apparatus as a whole, according to the example under consideration, is shown in Fig. 1 and 2 of the drawings as regards the exterior characteristics, while Fig. 3 and 4 show the remaining characteristics. The apparatus comprises a body 10 defining a casing for housing a container 11 (dashed in Fig. 3), in which a certain quantity of a drink has been pre-packed, for example, an infusion of coffee or something similar.

In the body 10, as shown, the electric heating means for the drink are arranged, for example, in the form of a metal plate 12 or similar device inserted in a suitable seat in the body 10, defining a heating surface 13 destined to come in contact with the drink container 11; the plate 12 presents one or more surfaces 13, each in contact with a respective electric heating device 15, for example, in the form of a resistor, thermistor or suchlike, opportunely positioned in order to obtain a rapid heating of the drink with minimum creepages of heat.

In the specific case shown, two electric heating devices 15 have been employed, connected in parallel with each other, in series to a regulable thermostat 16 and to the electric current plug organs 17a, 17b. Finally reference 18 indicates a small electric bulb, which lights up when the apparatus is in operation and, with its switching off, signals that the drink is hot. The regulation of the thermostat could even be omitted, or it could be done in a different way; nevertheless, it proves useful to heat the drink to one's liking according to one's needs, besides always taking care to prevent the electric heating means from being excessively rapid or the power being such as to cause an excessive overheating or such as to cause the breaking of the container, if left closed, because of the internal pressure of the vapour generated. In each case the apparatus can be calculated or provided with opportune passages or apertures for the passage of air (not shown), such as to ensure that the heating of the container does not exceed a safety temperature limit, above which in any case the automatic thermostat 16 intervenes to turn off the supply of electric current.

According to the present invention, the casing of the apparatus is prolonged on one side with a support shank 19, which is provided with electric plug members 17a and 17b, through which or through said shank, the apparatus is directly supported by a normal electric socket. In the case shown, which lends itself most for the use of the present apparatus, the support shank 19 and the electric plug members 17a and 17b for the current have been shaped to be suitable for the usual cylindrical current socket normally provided for the insertion of the cigarette lighter aboard a motor vehicle, making it possible in this way to heat the drink on board the vehicle itself even when in motion; however, the shank 19 and the electric plug members 17a and 17b for feeding the current could also be shaped differently in order to be suitable for a normal wall socket installed in dwelling-houses, offices and suchlike.

Lastly, the apparatus comprises retaining means for the drink container on the casing 10, which are capable of holding the container firmly, but in a removable way, in its seat during the heating in order to prevent the possibility of the container itself accidentally falling.

In the example shown, the retaining means for the drink container are in the form of two retaining hollow jaws 20, at least one of which, both in the case under consideration, is hinged or pivoted in 21 to the body 10 in such a way as to rotate towards the outside, thus moving away from the other retaining jaw. A biasing means such as a spring 22 or other equivalent means acts on the jaw, or on each jaw, in order to bring it back towards the other, into the condition of retaining the drink container, as shown.

According to the form of the drink container 11, the retaining jaws 20 can present sloping guide surfaces 23 and 24 along part of their top edges so as to facilitate, or render partially automatic, the introduction of the container 11 into its seat, by means of a simple thrust or pressure downwards; nevertheless, this does not exclude that, within the scope of the innovative concept explained, other solutions may be adopted which provide a different conformation or disposition of the retaining means for the container, for example, exploiting the elasticity of plastic materials both in order to obtain the hinging of the jaws and the biasing return force, or shaping the jaws in the form of several elastically flexible arms capable of surrounding and holding the container 11, but in a separable way.

## Claims

1. An electric apparatus for heating drinks pre-packed in containers, characterized by the fact that it comprises a casing (10) for the drink container (11), electric heating means (12, 15) and retaining means (20) for removably holding the drink container (11), in said casing (10) and in contact with said electric heating means (12, 15); said support casing (10) comprising a support shank (19) terminating with electric plug means (17a, 17b) for feeding the current, said plug means (17a, 17b) being connected to the electric heating means (12, 15) and second means for retaining said shank (19) in an electric current socket.

2. An apparatus as claimed in Claim 1, characterized by the fact that the electric heating means (12, 15) comprise a heating surface (13) destined to come in contact with the drink container (11) to be heated and electric heating devices (15) in contact with the above-mentioned heating surface (13).

3. An apparatus as claimed in Claim 1, characterized by the fact that the electric heating means comprise regulation means (16) for the current and/or the voltage supply.

4. An apparatus as claimed in Claim 3, characterized by the fact that the electric heating means comprise a thermostat for controlling the heating temperature, in the electric circuit of said heating devices (15).

5. An apparatus as claimed in Claim 1, characterized by the fact that a signal bulb (18) is connected to the feeding circuit of said electric heating devices (15).

6. An apparatus as claimed in Claim 1, characterized by the fact that the retaining means (20) for the drink container (11) comprise tiltable retaining member, surrounding the drink container, and biasing return means (21) acting on said tiltable retaining member (20) to move them towards said drink container (11).

7. An apparatus as claimed in Claim 6, characterized by the fact that said retaining members are in the form of hollow jaws hinged to the casing (10) for the drink container (11).

8. An apparatus as claimed in Claims 6 and 7, characterized by the fact that the retaining members for the drink container (11) comprise sloping guide surfaces (23) for the drink container (11).

9. An apparatus as claimed in Claim 6, characterized by the fact that the retaining members (20) for the drink container are in the form of elastically diverging arms.

10. An apparatus as claimed in Claim 1 and in one or more subsequent claims, characterized by the fact that the support shank (19) of the apparatus and the electric plug means (17a, 17b) are shaped so as to be suitable for a normal electric current socket on a motor vehicle for the insertion of a cigarette lighter.

11. An apparatus as claimed in Claim 1 and in one or more subsequent claims, characterized by the fact that the support shank (19) of the apparatus and the electric plug means (17a, 17b) are shaped so as to be suitable for a normal electric wall socket.

0 270 859

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | CH-A- 609 853 (HAUPT) <br> * Whole document * | 1,2,10, 11 | A 47 J 36/24 <br> B 60 N 3/16 |
| X | DE-A-1 579 454 (PATZNER) <br> * Whole document * | 1,2,10 | |
| X | CH-A- 471 519 (BOLIN) <br> * Whole document * | 1,3,4,5 ,10 | |
| X | US-A-3 467 816 (WAHLBERG) <br> * Whole document * | 1,10 | |
| A | US-A-3 284 613 (GETTELMAN et al.) <br> * Whole document * | 1-4,6,9 | |
| A | US-A-2 879 367 (McLEAN) | | |

TECHNICAL FIELDS
SEARCHED (Int. Cl.4)

A 47 J
B 60 N

The present search report has been drawn up for all claims

| Place of search | Date of completion of the search | Examiner |
|---|---|---|
| THE HAGUE | 23-02-1988 | SCHARTZ J. |

EPO FORM 1503 03.82 (P0401)